(19) **Europäisches Patentamt**

**European Patent Office**

**Office européen des brevets**

(11) **EP 1 160 584 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(51) Int Cl.:
*G01S 13/32* *(2006.01)*          *G01S 13/42* *(2006.01)*
*G01S 15/32* *(2006.01)*          *G01S 15/42* *(2006.01)*
*G01S 7/534* *(2006.01)*

(21) Anmeldenummer: **01109482.8**

(22) Anmeldetag: **25.04.2001**

(54) **Verfahren zum Bestimmen von Richtung und/ oder Entfernung reflektierender Zielorte**

Method for determining direction and/or distance to reflecting targets

Méthode pour déterminer la direction et/ou la distance vers des cibles réflectives

(84) Benannte Vertragsstaaten:
**DE FR GB NL**

(30) Priorität: **31.05.2000 DE 10026787**

(43) Veröffentlichungstag der Anmeldung:
**05.12.2001 Patentblatt 2001/49**

(73) Patentinhaber: **ATLAS ELEKTRONIK GMBH**
**28305 Bremen (DE)**

(72) Erfinder: **Arens, Egidius**
**28832 Achim (DE)**

(56) Entgegenhaltungen:
**DE-A- 2 045 276          DE-B- 1 284 334**
**US-A- 3 882 444**

## Beschreibung

Die Erfindung betrifft ein Verfahren zum Bestimmen von Richtung und/oder Entfernung reflektierender Zielorte der im Oberbegriff des Anspruch 1 genannten Art.

In der Rückstrahlortungstechnik werden von einer Sende- und/oder Empfangsanordnung gerichtet Schallwellen oder elektromagnetische Wellen ausgesendet und nach Reflexion empfangen. Die Sende- und/oder Empfangsrichtung gibt die Richtung, die Laufzeit der Welle die Entfernung zum reflektierenden Zielort an. Diese Technik wird z.B. verwendet, um Bodenprofile zu vermessen oder auch Hindernisse und/oder Ziele im Ausbreitungsmedium zu orten.

Aus der DE-OS 2 045 276 ist ein Verfahren zum Bestimmen der Tiefe eines Gewässers bekannt, bei dem von einem Vermessungsschiff unter einem Winkel zur Lotrechten über eine Richtcharakteristik gerichtete Schallwellen ausgesendet und empfangen werden. Äquidistant angeordnete Wandlerelemente einer ebenen Sende-/Empfangsanordnung werden von einem Dreiphasengenerator derart angesteuert, daß Sendesignale benachbarter Wandlerelemente eine Phasendifferenz von $\varphi = {}^2/_3\Pi = \pm$ 120° aufweisen. Bei konstantem Wandlerabstand d und Zusammenfassen von Wandlerelementen, die mit gleicher Phase angesteuert werden, stellt sich eine frequenzabhängige Senderichtung der Schallwelle ein. Die Frequenz f und der Wandlerabstand d sind so gewählt, daß für eine über der Tiefe gemittelten Schallgeschwindigkeit c der Abstrahlwinkel 45° beträgt. Beim Empfang werden Empfangssignale der Wandlerelemente mit den gleichen Phasendifferenzen bewertet und addiert, so daß die Hauptempfangsrichtung der so gebildeten Richtcharakteristik auf den beim Senden beschallten Boden weist und die dort gestreuten oder reflektierten Anteile der Schallenergie gebündelt empfangen werden. Durch Variation der Frequenz der ausgesendeten Schallwellen wird erreicht, daß trotz Änderungen der Schallgeschwindigkeit längs des Schallausbreitungswegs aufgrund von Wasserschichtungen und den dadurch bedingten Änderungen der Schallausbreitungsrichtung ein mittlerer Abstrahlwinkel von 45° erhalten bleibt. Die Laufzeit des Schalls zwischen Senden und Empfangen wird gemessen und damit die Tiefe bestimmt.

Da der mittlere Abstrahlwinkel 45° beträgt, sind Tiefe und der Abstand zwischen ihrem Meßort und der geographischen Position des Vermessungsschiffs gleich und eine kartographische Zuordnung ist in einfacher Weise möglich. Mit diesem Verfahren ist je Sendeperiode eine einzige exakte Tiefenmessung möglich. Die Sendefrequenz wird stets so eingestellt, daß der mittlere Abstrahlwinkel 45° beträgt, da nur dann die geforderte Meßgenauigkeit eingehalten werden kann. Um ein Bodenprofil zu vermessen, fährt das Vermessungsschiff längs eines vorgebbaren Kurses und reiht die sukzessiv gemessenen Tiefenwerte aneinander. Der Nachteil dieses Verfahrens besteht darin, daß ohne Positionsveränderung ein Überblick über die Bodenerhebungen in einem größeren Vermessungsgebiet nicht gewonnen werden kann.

Es ist Aufgabe der vorliegenden Erfindung, ein Verfahren der im Oberbegriff des Anspruchs 1 genannten Art zu schaffen, bei dem mit einer vorgebbaren Anzahl von phasenverschobenen Sendesignalen eine Sende- und/oder Empfangsanordnung so angesteuert wird, daß ein ganzes Gebiet bezüglich reflektierender Zielorte gleichzeitig beobachtet und vermessen werden kann.

Diese Aufgabe wird erfindungsgemäß durch die im Kennzeichenteil des Anspruchs 1 genannten Merkmale gelöst.

Von Wandlerelementen der Sendeanordnung wird breitbandiges Rauschen mit großem Zeitbandbreiteprodukt ausgesendet. Aufgrund der Phasenansteuerung der Wandlerelemente breiten sich die Wellen, z.B. Schallwellen, frequenzabhängig in unterschiedliche Senderichtungen aus und überlagern sich. Es bildet sich im Ausbreitungsmedium, z.B. Luft oder Wasser im Fernfeld der Sendeanordnung ein charakteristischer Schalldruckverlauf aus. Dieser Schalldruckverlauf ist von der Frequenz und der Senderichtung abhängig und stellt die komplexe Übertragungsfunktion des Ausbreitungsmediums dar. Diese Übertragungsfunktion wird einem Filter aufgeprägt, mit dem ein empfangenes Echo gefiltert wird. Das Echo stammt von einem Zielort, der Schall aus einer einzigen Senderichtung streut oder reflektiert. Aufgrund des charakteristischen Schalldruckverlaufs gehört zu dieser Senderichtung ein eindeutiges Frequenzmuster. Mit dem Filter wird das Frequenzmuster im Echo erkannt und der Senderichtung und damit der Richtung zum Zielort zugeordnet.

Bei einer Anwendung des erfindungsgemäßen Verfahrens nach Anspruch 1 in der Rückstrahlortungstechnik mit elektromagnetischen Wellen, z.B. für Radaranlagen, bildet sich im Fernfeld der Sende/Empfangsantenne ein Interferenzfeld der elektrischen oder magnetischen Feldstärke aus, das für jede Senderichtung eine charakteristische Frequenzverteilung aufweist. Diese richtungs- und frequenzabhängige Feldstärkeverteilung stellt die komplexe Übertragungsfunktion des Ausbreitungsmediums dar und wird dem Filter aufgeprägt. Im folgenden wird das erfindungsgemäße Verfahren im Zusammenhang mit der Sonartechnik beschrieben. Es ist aber genauso in der Radartechnik anwendbar und ersetzt dort die sog. Phased-Array-Anlagen mit ihren Ortungsaufgaben, die eine hohe Winkelauflösung fordern.

Der frequenzabhängige Schalldruckverlauf im Wasser wird durch die Phasenansteuerung verursacht, wobei sich Schallwellenfronten mit der Schallgeschwindigkeit zum Zielort hinbewegen und von dort in gleicher Richtung über den gleichen Ausbreitungsweg zum Sendeort zurückbewegen. Der Ausbreitungsweg entspricht einer Laufzeit der Schallwellenfront und wird in der Übertragungsfunktion als Zeitterm, z.B. Verzögerungsglied, berücksichtigt, so daß Ausgangssignale des Filters Richtungen und Entfernungen zu Zielorten angeben.

Der Vorteil des erfindungsgemäßen Verfahrens nach Anspruch 1 besteht darin, daß eine Ansteuerung mit einer geringen Anzahl von breitbandigen Rauschsignalen ausreicht, z.B. von drei Rauschsignalen, die gegeneinander z.B. um 120° in der Phase verschoben sind, um einen Winkelsektor gleichzeitig mit Schallwellen so zu beschallen, daß die Übertragungsfunktion für die Schallwellen im Fernfeld ein charakteristisches Interferenzmuster aufweist, dessen Frequenzverteilung richtungsabhängig ist. Eine Richtungsunterscheidung reflektierender Zielorte erfolgt innerhalb des Winkelsektors nicht über Richtcharakteristiken, die mit Phasen- oder Laufzeitverzögerungsnetzwerken eines Richtungsbildners beim Senden und/oder Empfangen gebildet werden, sondern durch einen Filterprozeß für das Echo. Der Aufwand wäre enorm groß, um über Richtcharakteristiken, die benachbarte für unterschiedliche Frequenzen ausgelegt sind, eine so feine Winkeltrennung und -auflösung zu erzielen, wie sie durch das erfindungsgemäße Verfahren erreicht wird.

Gemäß der vorteilhaften Weiterbildung des erfindungsgemäßen Verfahrens nach Anspruch 2, wird der Winkelsektor und die Winkelauflösung bei einer gegebenen Antennenappertur sowie die Entfernungsauflösung und Reichweite durch Frequenz und Bandbreite des Rauschens und die Sendezeitdauer oder Rauschimpulslänge festgelegt.

Die breitbandigen, phasenverschobenen Rauschsignale zur Ansteuerung der zusammengefaßten Wandlerelemente können unabhängig voneinander gebildet werden oder von einer gemeinsamen Rauschquelle abgeleitet werden. Der Vorteil dieser Ansteuerung besteht in jedem Fall darin, daß nicht für jedes Wandlerelement ein separater Leistungsverstärker bereitgestellt werden muß, sondern nur eine wesentlich kleinere Anzahl, die z.B. gleich der Anzahl der unterschiedlichen Phasenverschiebungen ist.

Mit einer flächigen ebenen oder gewölbten Anordnung der Wandlerelemente gemäß Anspruch 3 und 4, wird eine punktuel unterscheidbare Ausleuchtung innerhalb von Ebenen in unterschiedlichen Entfernungen zur Sende-/ Empfangsanordnung erzielt. Bei einer Realisierung mit einer Verbundkeramikplatte wird ihre Dicke abhängig von der Mittenfrequenz des Rauschens dimensioniert.

In aller Regel werden die Wandlerelemente nach einem periodischen Raster auf der Sende- und/oder Empfangsanordnung angeordnet. Bei einer Ansteuerung benachbarter Wandlerelemente mit Sendesignalen, gemäß der vorteilhaften Weiterbildungen des erfindungsgemäßen Verfahrens nach den Ansprüchen 5 und 6 entsteht ein Interferenzfeld ohne Lücken und mit eindeutiger Zuordnung von Frequenzmuster und Richtung. Es werden benachbarte Wandlerelemente entweder statistisch verteilt mit konphasen Sendesignalen oder mit Sendesignalen, die eine der Phasendifferenzen zueinander aufweisen, angesteuert oder es werden Wandlerelemente zusammengefaßt, deren Lage auf der Sende- und/oder Empfangsanordnung statistisch verteilt ist, und mit dem gleichen Sendesignal angesteuert. Die Zahl der zusammengefaßten Wandlerelemente wird gleichgroß gewählt, so daß Leistungsverstärker für die Anzahl der Sendesignale gleich ausgelastet sind. Dadurch wird eine gleichmäßige Beschallung erreicht,
Eine Ausbreitung des Schalls in einem Muster entsprechend ausgeprägten Richtcharakteristiken mit Hauptemfangsrichtungen und sog. Grating-Loops, die sich aufgrund des Wandlerabstands bei großer Bandbreite einstellen würden, ist durch die statistische Ansteuerung vermieden, vielmehr zeigt das Interferenzfeld der sich von jedem Wandlerelement ausbreitenden Kugelwellen im Fernfeld eine Intensitätsverteilung, die für jede Richtung andere Frequenzkomponenten aufweist, so daß die Übertragungsfunktionen für einen abgestrahlten Rauschimpuls großer Bandbreite für benachbarte Richtungen orthogonal sind. Damit ist durch das Filter, das mit dieser Übertragungsfunktion ausgelegt ist, eine eindeutige Richtungsbestimmung des Zielorts durch Auswerten eines einzigen Echos möglich, das beispielsweise mit einem einzigen Wandlerelement mit Kugelcharakteristik empfangen wird. Eine Richtungsbildung und Interpolation von Gruppensignalen benachbarter Richtcharakteristiken auf der Empfangsseite erübrigt sich, mit der eine kontinuierliche winkelmäßige Überwachung des Empfangsraums möglich wäre. Alle die dabei entstehenden Fehlermöglichkeiten werden durch das erfindungsgemäße Verfahren ausgeschlossen. Vielmehr wird durch das erfindungsgemäße Verfahren eine Winkelauflösung erzielt, die durch das Zeitbandbreiteprodukt des Rauschimpulses vorgegeben werden kann. Bei einer Appertургröße der Sendeanordnung von $5.10^3\lambda^2$, einer Bandbreite von z.B. 100 kHz bis 300 kHz und einer Sendezeit von 100 ms läßt sich eine Richtungszuordnung realisieren, die einer Sende- und/oder Empfangsanordnung mit 20000 herkömmlich gebildeten Richtcharakteristiken und einer Nebenzipfeldämpfung von 10 log 20000 entspricht.

Mit den vorteilhaften Weiterbildungen gemäß den Ansprüchen 6 und 7 werden unterschiedliche Fertigungsmöglichkeiten für die Sende- und/oder Empfangsanordnung berücksichtigt. Der Vorteil einer randomverteilten Kontaktierung diskreter Wandlerelemente besteht insbesondere darin, daß nach der Fertigung der Sende- und/oder Empfangsanordnung unterschiedliche Verteilungen für eine Optimierung durch Ausmessen des Fernfeldes ausprobiert werden können, wie es in Anspruch 8 angegeben ist. Eine optimale Verteilung ist dann erreicht, wenn die Übertragungsfunktion für jede Richtung eindeutig ist und ihre Maxima annähernd gleiche Pegelwerte aufweisen. Der Vorteil liegt in einer hohen Winkelauflösung und einer geringen, richtungsunabhängigen Falschalarmrate.

Im Zusammenhang mit der Prüfung nach Fertigung der Sendeanordnung ist es gemäß der vorteilhaften Weiterbildung des erfindungsgemäßen nach Anspruch 9 möglich, gleichzeitig die Übertragungsfunktion für das Filter zu bestimmen, indem die Schallverteilung im Fernfeld nach Betrag und Phase in Abhängigkeit von der Senderichtung und Frequenz gemessen wird.

Der Vorteil der Bestimmung der Übertragungsfunktion gemäß der vorteilhaften Weiterbildung des erfindungsgemäßen Verfahrens nach Anspruch 10 besteht darin, daß die Übertragungsfunktion für das Filter durch Rechnersimulation berechnet wird, indem eine Schallfeldverteilung mit statistisch verteilten Schallquellen vorgebbarer Phasendifferenzen zueinander nachgebildet wird.

Eine andere Art der Berechnung der Übertragungsfunktion geht davon aus, daß eine Schallwelle abhängig von ihrer Frequenz die Sendeanordnung unter solchen Richtungen verläßt, daß sich konphase Schallwellen als Wellenfronten im Wasser ausbreiten. Diese Wellenfronten legen in gleichen Laufzeiten gleiche Wege zurück. Diese Wege sind bei einer bestimmten ortsabhängigen Phasenbelegung der breitbandigen Sendesignale vom Wandlerabstand und der Frequenz abhängig. Bei der Berechnung der Übertragungsfunktion gemäß der Weiterbildung des erfindungsgemäßen Verfahrens nach Anspruch 11 wird diese frequenzabhängige Schallausbreitung zugrunde gelegt. Der Vorteil besteht darin, daß Phasen- und Laufzeitbeziehungen im Zeit- und Frequenzbereich durch die Berechnung im komplexen Zahlenraum eindeutig erhalten bleiben.

Das empfangene Echo wird im Filter mit der frequenzabhängigen Übertragungsfunktion für jede Senderichtung bewertet. Der Vorteil der Weiterbildung des erfindungsgemäßen Verfahrens nach Anspruch 12 besteht darin, daß das Reflexionsverhalten des Zielortes bei der Bewertung des Echos berücksichtigt wird. Die Übertragungsfunktion wird mit einem Reflexionsfaktor "+1" multipliziert, wenn der Zielort schallhart reflektiert. Bei einem schallweichen Zielort beträgt der Reflexionsfaktor "-1". Der Reflexionsfaktor ist eine komplexe Größe, die abhängig ist vom Wellenwiderstand des Ausbreitungsmediums und des reflektierenden Objekts. Die Amplitude des Reflexionsfaktors gibt die Dämpfung der Schallwelle am Reflexionsort an, die Phase des Reflexionsfaktors die winkelabhängige Phasendrehung der reflektierten Schallwelle. Abhängig vom Zielobjekt ist der Reflexionsfaktor als komplexe Größe anzusetzen, wobei bei einer Reflexion an einer rauhen Fläche, z.B. der Wasseroberfläche, die Phase ortsabhängig durch Struktur oder Wellenbildung der Wasseroberfläche statistisch variiert. Mit dem Reflexionsfaktor wird eine Zielgeometrie nachgebildet. Der Vorteil des erfindungsgemäßen Verfahrens nach Anspruch 12 besteht darin, daß durch die Wahl des Reflexionsfaktors eine Zielortselektion und/oder Klassifikation möglich ist.

Gemäß der vorteilhaften Weiterbildung des erfindungsgemäßen Verfahrens nach Anspruch 13 wird die Filterung des Echos in einem sog. matched Filter durchgeführt, in dem das Echo mit einem Mustersignal verglichen wird. Das Mustersignal wird aus dem Produkt der Übertragungsfunktion, des Reflexionsfaktors und des zeitlich verschiebbaren Sendesignals berechnet und mit dem Echo korreliert. Das Korrelationsergebnis ist eine Impulskompression. Echo und Mustersignal werden in Abhängigkeit von der Frequenz und der Zeit gegeneinander verschoben, multipliziert und aufsummiert. Das Echo enthält nur Frequenzkomponenten, die die Übertragungsfunktion in Senderichtung zum Zielort kennzeichnen. Das schmale, hohe Maximum der Korrelationsfunktion, das die Übereinstimmungen im Frequenz- und Zeitbereich kennzeichnet, gibt die Richtung und Entfernung zum Zielort exakt und eindeutig an, seine Lage wird z.B. durch Differenziation nach dem Winkel für die Richtungsangabe und der Zeit für die Entfernungsangabe bestimmt.

Die vorteilhafte Weiterbildung des erfindungsgemäßen Verfahrens nach Anspruch 14 gibt eine besonders elegante Erzeugung der um die Phasendifferenzen verschobenen Sendesignale an. Beträgt die Phasendifferenz z.B. $\pm$ 120°, so werden drei Sendesignale aus einem in einem Rechner ermittelten komplexen Rauschspektrum vorzugsweise konstanten Betrags und randomverteilter Phase durch Multiplikation mit den Faktoren $e^{j0}$, $e^{j2/3\Pi}$, $e^{-j2/3\Pi}$ berechnet. Die drei phasenverschobenen, komplexen Sendefrequenzspektren werden durch inverse Fouriertransformation in den Zeitbereich transformiert und bilden die drei Sendesignale. Eine andere Anzahl von Sendesignalen ist ebenfalls möglich, z.B. vier Sendesignale mit Phasendifferenzen $\pm$ 90°, $\pm$ 180°. Die zusammengeschalteten Wandlerelemente werden nach entsprechender Verstärkung mit einem der Sendesignale beaufschlagt. Der Vorteil dieser Sendesignalerzeugung besteht darin, daß die Berechnung eines komplexen Rauschspektrums und der inversen Fouriertransformation des Rauschspektrums Standardfunktionen in der Rechnertechnik darstellen, die nicht einer besonderen Programmierung bedürfen. Außerdem sind nur Leistungsverstärker entsprechend der Anzahl der Phasendifferenzen für die Ansteuerung der Wandlerelemente bereitzustellen.

Bei dieser Sendesignalerzeugung ist es besonders vorteilhaft, die Übertragungsfunktion aus den drei komplexen Sendefrequenzspektren zu berechnen, wie es in der Weiterbildung des erfindungsgemäßen Verfahrens nach Anspruch 15 angegeben ist. Da diese Sendefrequenzspektren ohnehin bereits berechnet wurden, stellt die Summenbildung von Frequenzkomponenten, die ein Abstrahlen in die gleiche Senderichtung bewirken, eine einfache Sortierroutine dar. Mit dieser Übertragungsfunktion erfolgt die Weiterverarbeitung des Echos nicht im Zeit-, sondern ebenfalls im Frequenzbereich, wie es in der vorteilhaften Weiterbildung des erfindungsgemäßen Verfahrens nach Anspruch 16 angeben ist. Es wird ein richtungs- und frequenzabhägiges Musterspektrum aus dem Sendefrequenzspektrum multipliziert mit der Übertragungsfunktion und/oder dem Reflexionsfaktor des Zielorts gebildet und mit einem komplexen Echofrequenzspektrum verglichen, das aus dem empfangenen Echo durch Fouriertransformation gewonnen wird. Die Filterung des Echos erfolgt hier nicht im Zeitbereich, sondern im Frequenzbereich und entspricht einer Mustererkennung. Immer dann, wenn das Echofrequenzspektrum, das für eine Richtung charakteristisch ist, dem Musterspektrum gleicht, ist die Richtung zum Zielort gefunden. Die Zeitverschiebung zwischen Echofrequenzspektrum und Musterspektrum wird ebenfalls bestimmt und gibt die Entfernung zum Zielort an. Als Rechneralgorithmen werden vorteilhaft auch wieder Methoden der Korrelation oder Faltung eingesetzt, die eine Verarbeitung in Echtzeit gestatten.

Der Vorteil der Weiterbildungen des erfindungsgemäßen Verfahrens nach den Ansprüchen 17 und 18 besteht darin, daß das Echo sich nur aus solchen Empfangssignalen der Wandlerelemente zusammensetzt, die nicht nur aus der gleichen Senderichtung, sondern auch aus der gleichen, der Senderichtung entsprechenden Empfangsrichtung stammen. Eine Verbesserung des Nutz/Störverhältnisses stellt sich ein, da im Mustersignal oder Musterspektrum zusätzlich eine weitere Übertragungsfunktion für Empfangsrichtungen, die identisch mit der bereits ermittelten Übertragungsfunktion für den Sendefall ist, enthalten ist und mit der Summe oder mit dem Echofrequenzspektrum aus der Summe der phasenverschobenen Empfangssignale der zusammengefaßten Wandlerelemente verglichen wird. Diese Art der Signalverarbeitung bringt die gleichen Vorteile, die sich einstellen, wenn mit einer Aktivsonaranlage über Senderichtcharakteristiken gebündelt Schallwellen gesendet und reflektierte Schallwellen über Empfangsrichtcharakteristiken gebündelt empfangen werden. Damit werden Störungen aus anderen Richtungen als der Sende- und Empfangsrichtung zum Zielort unterdrückt und das Nutz- zu Störverhältnis verbessert. Reichweite und Detektionswahrscheinlichkeit werden erhöht.

Bei der vorteilhaften Weiterbildung des erfindungsgemäßen Verfahrens nach Anspruch 19 wird berücksichtigt, daß Schallwellen entlang ihres Ausbreitungswegs gedämpft werden. Diese Dämpfung ist um so größer, je höher die Frequenz der Schallwelle ist. Bei einer Ausbreitung über große Distanzen kann die Dämpfung nicht mehr vernachlässigt werden und die Bestimmung des Zielorts ist um so genauer, je exakter die Übertragungsfunktion des Filters die Schallausbreitung im Übertragungsmedium nachbildet.

Die Entfernung zum Ziel ist durch Korrelation des Echos mit dem Sendesignal in einfacher Weise möglich, indem das Sendesignal zeitlich solange verschoben wird, bis es mit dem Echo zur Deckung gebracht wird. Die Verschiebungszeit gibt die Laufzeit der Schallwelle vom Sendeort zum Zielort und zurück an. Die Laufzeit wird mit der Schallgeschwindigkeit verknüpft und gibt die Entfernung in Richtung zum Zielort an. Die vorteilhafte Weiterbildung nach Anspruch 20 gibt eine andere Möglichkeit der Entfernungsbestimmung an, indem die Übertragungsfunktion im Mustersignal oder Musterspektrum mit einem Laufzeitterm für unterschiedliche, vorgebbare Entfernungen multipliziert wird.

Ein Filterungsprozeß des Echos gemäß der vorteilhaften Weiterbildung des erfindungsgemäßen Verfahren nach Anspruch 21 beschränkt sich auf einige wenige Programmschritte. Das Echofrequenzspektrum wird mit dem konjugiert komplexen Musterspektrum multipliziert und das Produkt mit einer Exponentialfunktion multipliziert, deren Exponent die Frequenz und die Laufzeit beinhaltet. Hierüber wird das Integral in Abhängigkeit von der Frequenz und der Zeit in den Grenzen von Bandbreite und Impulslänge bzw. Sendezeitdauer gebildet und der Betrag bestimmt. Dieser gesamte Rechenprozeß bewirkt eine Filterung wie in der Matched-Filter-Technik. Es wird eine Auswahl und Summierung derjenigen Frequenzkomponenten des Echos getroffen, die aus der gleichen Richtung empfangen wurden, und eine zeitliche Impulskompression dieser Frequenzkomponten durchgeführt, so daß das Ausgangssignal eine komplexe Funktion in Abhängigkeit von der Richtung und der Entfernung ist. Jedes Maximum des Betrags der Funktion kennzeichnet Richtung und Entfernung zu einem Zielort. Diese Filterung kann auch als eine Transformation des Produkts vom Frequenzbereich in einen Winkel- und Laufzeitbereich aufgefaßt werden. Eine Realisierung wird mit in der Rechnertechnik geläufigen Routinen erzielt, ist aber auch durch optische Signalverarbeitungsmittel möglich, wie sie beispielsweise in der deutschen Offenlegungsschrift 37 44 051 beschrieben sind.

Der Vorteil einer Aufteilung der Bandbreite des Rauschens in Teilfrequenzbänder und Bestimmung von einzelnen Übertragungsfunktionen für jedes Teilfrequenzband gemäß der Weiterbildung des erfindungsgemäßen Verfahrens nach Anspruch 22 besteht darin, daß im Empfangsfall das Echo frequenzmäßig in Teilechos aufgeteilt wird und jedem Teilecho ein Teil des Sendesignals mit einem kleineren Zeitbandbreiteprodukt zugeordnet werden kann. Momentane frequenzabhängige Störungen bei der Ausbreitung des Schalls innerhalb eines der Teilbänder verfälschen dann nicht das Ortungsergebnis, da die Kohärenzbedingung für die richtungsabhängige Schallausbreitung in den übrigen Teilbändern erhalten geblieben ist.

Besteht zwischen Zielort und Sende- und/oder Empfangsanlage eine Relativbewegung in Sende-/Empfangsrichtung, so wird die den Zielort erreichende und reflektierte Schallwelle zeitlich abhängig von der Größe und Richtung der Geschwindigkeit gestaucht oder gedehnt. Diese zeitliche Veränderung bewirkt eine Frequenzveränderung und ist als Dopplereffekt bekannt. Für die Filterung des Echos im Zeitbereich wird das Mustersignal aus zeitlich gestauchten und/oder gedehnten zeitverschobenen Sendesignalen gebildet, mit der Übertragungsfunktion für die Senderichtung, mit der gleichen Übertragungsfunktion für die Empfangsrichtung und ggf. dem Reflektionsfaktor und der Dämpfungsfunktion multipliziert. Dieses Mustersignal wird gemäß der vorteilhaften Weiterbildung des erfindungsgemäßen Verfahrens nach Anspruch 23 mit dem Echo korreliert und liefert nicht nur Richtung und Entfernung, sondern auch die Relativgeschwindigkeit zum Zielort.

Diese zweidimensionale Korrelation wird in der vorteilhaften Weiterbildung des erfindungsgemäßen Verfahrens nach Anspruch 24 nicht im Zeit-, sondern im Frequenzbereich durchgeführt, indem das zeitlich gedehnte und/oder gestauchte Sendesignal durch Fourier-Transformation in ein Spektrum umgewandelt wird, dem eine Zeitverschiebung zur Bestimmung der Entfernung aufgeprägt wird, und aus diesem zeitverschobenen Spektrum das Musterspektrum ermittelt wird. Auch hier wird wieder eine zweidimensionale Korrelation durchgeführt und dadurch die Zieldaten "Peilung - Entfernung - Geschwindigkeit" für alle Zielorte im Winkelsektor durch einen einzigen Filterprozeß bestimmt. Die notwendigen Rechenoperationen erfordern schnelle und leistungsstarke Rechner, um die anfallende Datenmenge mit dieser eleganten Methode zu verarbeiten.

Vielfältige Anwendungsgebiete des erfindungsgemäßen Verfahrens in der Rückstrahlortungstechnik für Luftschall oder Wasserschall oder elektromagnetische Wellen sind möglich. Der Einsatz gemäß der vorteilhaften Weiterbildung des erfindungsgemäßen Verfahrens nach Anspruch 25 in einer hydrographischen Vermessungsanlage bringt den Vorteil einer flächigen Vermessung und Kartographie eines Seegebiets, der Einsatz bei einer Minenjagdanlage den Vorteil des gleichzeitigen Erfassens eines großen, in Vorausrichtung liegenden Seegebiets und eine Möglichkeit der Unterscheidung zwischen Grundminen und Ankertauminen, der Einsatz bei einem unbemannten Unterwasserfahrzeug beispielsweise zur Räumung von Minen die Unabhängigkeit von der Wasserqualität, wie sie sonst bei einer Beleuchtung mit Licht nicht gegeben ist.

Von ganz besonderer Bedeutung ist der Einsatz im Zusammenhang mit einem U-Boot, wie es in der vorteilhaften Weiterbildung des erfindungsgemäßen Verfahrens nach Anspruch 26 angegeben ist. Es besteht beim Auftauchvorgang eines U-Boots eine große Gefahr, Wasserfahrzeuge an der Wasseroberfläche oder Fischnetze im Wasservolumen zwischen U-Boot und Wasseroberfläche mit den an Bord befindlichen üblichen Sonaranlagen nicht zu erkennen, die eine Aufklärung dieses Bereichs nicht gestatten. Mit nur einem einzigen breitbandigen Sendeimpuls und einer Anordnung von Wandlerelementen auf der Oberseite des U-Bootes kann der Kommandant des U-Boots bei Einsatz des erfindungsgemäßen Verfahrens unmittelbar in einem großen Winkelsektor oberhalb des U-Boots erkennen, ob ein Auftauchen andere Wasserfahrzeuge oder andere Hindernisse, z.B. Seezeichen gefährden könnte. Diese Sicherheit beim Auftauchen wird durch die Maßnahmen der vorteilhaften Weiterbildungen nach den Ansprüchen 27 bis 28 erhöht. Der Reflexionsfaktor wird positiv oder gleich eins gewählt und charakterisiert eine schallharte Reflexion. Da die gefährdeten Objekte sich im wesentlichen in gleichweibender Entfernung zum U-Boot befinden, die geringer als die Entfernung zur Wasseroberfläche ist, und die eigene Tauchtiefe in aller Regel bekannt ist, vereinfacht sich die Signalverabeitung dahingehend, daß nur ein bestimmtes Entfernungsfenster bezüglich eines Aufkommens schallharter, reflektierender Objekte in Frage kommt. Für eine eventuell geforderte Tiefenmessung des U-Boots wird der Reflexionsfaktor mit einer statistischen Phasenverteilung belegt, wodurch die Wasseroberfläche nachgebildet wird.

Die Erfindung ist anhand eines in der Zeichnung dargestellten Ausführungsbeispiels im folgenden nähere beschrieben. Es zeigen.

Fig. 1          ein Blockschaltbild,

Fig. 2          eine Sendebasis nach dem Stand der Technik,

Fig. 3          ein Diagramm für die Schallpegelverteilung in Abhängigkeit von Frequenz und Winkel,

Fig. 3a, b      Schnitte durch das Diagramm gemäß Fig. 3 unter unterschiedlichen Winkeln,

Fig. 3c         das Diagramm gemäß Fig. 3 als Intensitätsschrieb,

Fig. 4          Ausgangssignal eines Filters im Blockschaltbild gemäß Fig. 1,

Fig. 5          ein modifiziertes Blockschaltbild für eine Signalverarbeitung im Frequenzbereich,

Fig. 6a und b   Echofrequenzspekren bei Reflexion unter unterschiedlichen Winkeln und

Fig. 7a, b, c   Ausgangssignale eines Filters im Blockschaltbild gemäß Fig. 4.

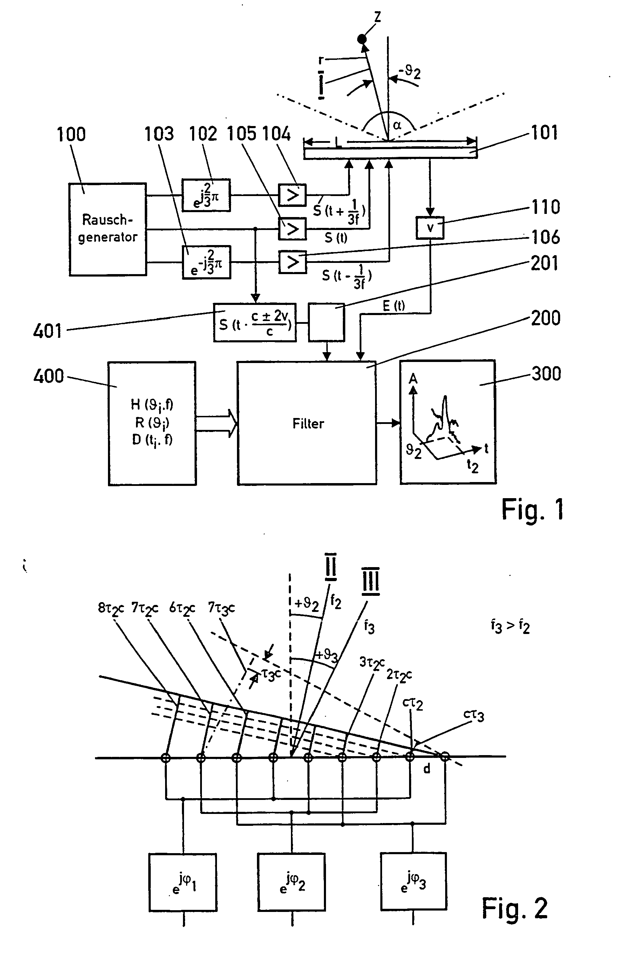

Ein Rauschgenerator 100 in Fig. 1 erzeugt ein Rauschsignal mit konstanter Amplitude, vorgebbarer Bandbreite und Mittenfrequenz und statistischer Phasenverteilung für eine wählbare Sendezeitdauer. Das Produkt aus Bandbreite und Sendezeitdauer ist sehr viel größer als 1, z.B. 20000. Die Mittenfrequenz und Bandbreite des Rauschens, ein mittlerer Abstand d von statistisch verteilten Wandlerelementen auf einer Sende- und/oder Empfangsanordnung 101 und ihre flächige Ausdehnung $L^2$ werden abhängig von einem zu beschallenden Winkelsektor $\alpha$ und einer geforderten Winkelauflösung dimensioniert. Das Rauschsignal wird in Multiplizierstufen 102, 103 um gleiche Phasendifferenzen $\varphi$ = $\pm$ 120° = $\pm$ 2/3 n gegeneinander verschoben und in Leistungsverstärkern 104, 105, 106 verstärkt. Die Leistungsverstärker 104, 105 und 106 liefern drei Sendesignale S(t), S(t-1/3f), S(t+1/3f), die aufgrund der Phasenverschiebung um die Phasendifferenzen $\phi$ frequenzabhängige Zeitverzögerungen $\tau$ = 0 oder $\tau$ = $\pm$ 1/3f zueinander aufweisen.

Eine Zeitverzögerung $\tau$ bewirkt eine Ausbreitung der Schallwellen mit einer Schallgeschwindigkeit c in frequenzabhängigen Ausbreitungsrichtungen, wie es in Fig. 2 beispielhaft für zwei Frequenzen $f_2$, $f_3$ und eine äquidistante Wandlerbelegung näher veranschaulicht ist und aus dem Stand der Technik bekannt ist. Bei der Frequenz $f_2$ stellt sich

eine Ausbreitungsrichtung II unter einem Winkel $\vartheta_2$ ein, da die Phasendifferenzen von $\varphi = \pm\,120° = \pm\,{}^2/_3\Pi$ eine kohärente Überlagerung der von den Wandlerelementen abgestrahlten Kugelwelle in einem Abstand

$$c \cdot \tau_2 = \frac{c \cdot \varphi}{2\pi \cdot f_2} = \frac{c}{3\,f_2}$$

bewirkt. Aus der Geometrie der Wandlerbelegung berechnet sich der Winkel $\vartheta_2$:

$$\sin\vartheta_2 = \frac{\tau_2 \cdot c}{d} = \frac{\varphi}{2\pi\,f_2} \cdot \frac{c}{d} = \frac{2\pi}{3 \cdot 2\pi\,f_2 \cdot d} = \frac{c}{3d \cdot f_2}$$

Bei der Sendefrequenz $f_3$ stellt sich eine Ausbreitungsrichtung III unter dem Winkel $\vartheta_3$ für die Schallwelle mit der Frequenz $f_3$ ein:

$$\sin\vartheta_3 = \frac{\tau_3 \cdot c}{d} = \frac{\varphi}{2\pi\,f_3} \cdot \frac{c}{d} = \frac{c}{3d \cdot f_3}$$

Durch eine statistische örtliche Verteilung und ein Zusammenfassung der Wandlerelemente auf der Sende- und/oder Empfangsanordnung 101 und einer Ansteuerung mit den drei Sendesignalen gemäß Fig. 1 wird eine komplette Beschallung des Winkelsektors $\alpha$ erreicht und eine für jede Senderichtung signifikante frequenzabhängige und breitbandige Schalldruckverteilung bewirkt.

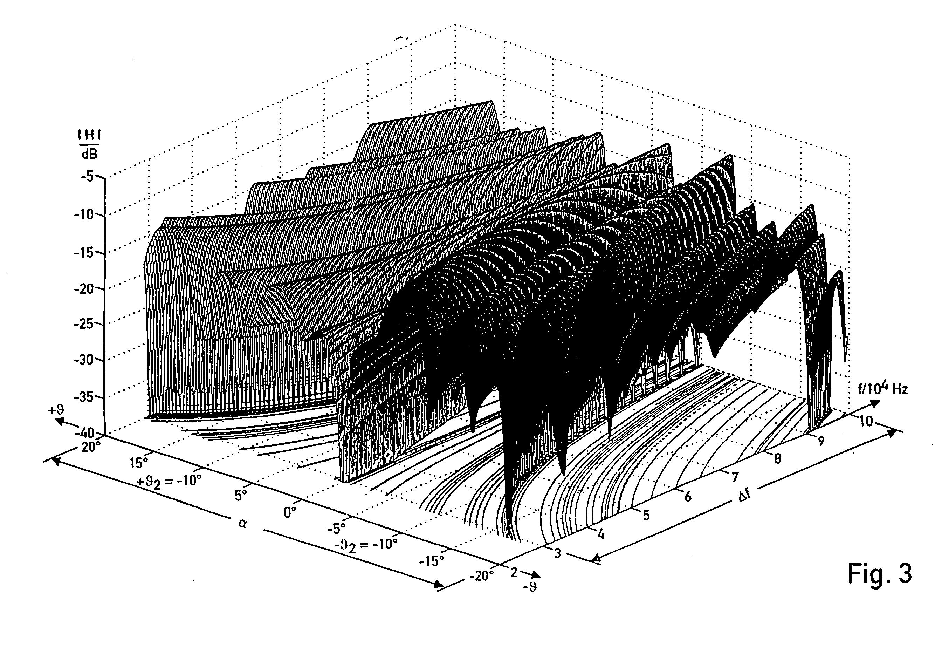

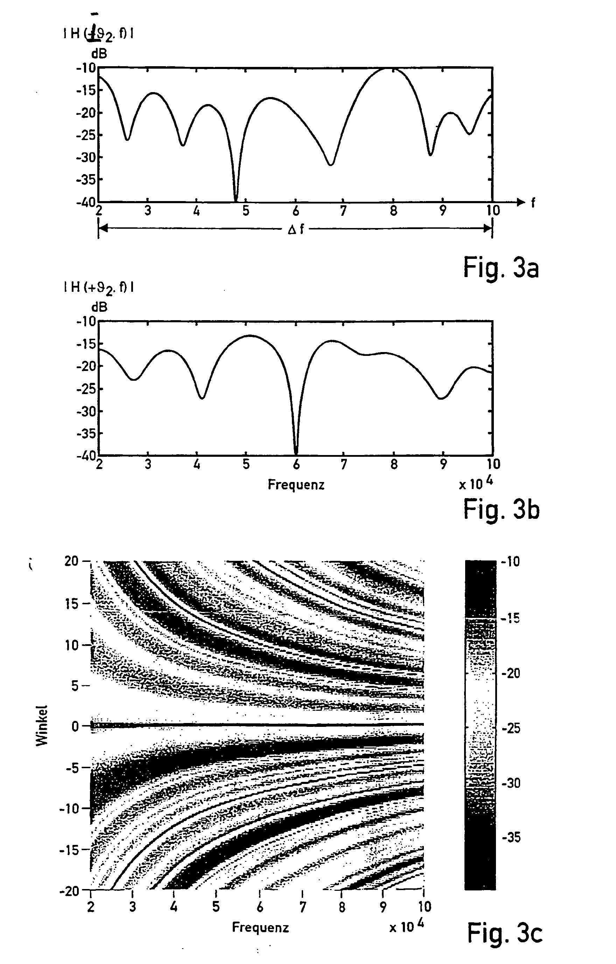

Fig. 3 zeigt Schallpegel bei einer solchen Schalldruckverteilung in Abhängigkeit von der Frequenz f und der Richtung entsprechend dem Winkel 9. Über einer Ebene, die durch eine Frequenz- und Winkelachse aufgespannt wird, ist der Schallpegel in dB aufgetragen. Auf der Frequenzachse ist die Bandbreite $\Delta f$ des gesendeten Rauschsignals angegeben, auf der Winkelachse der Winkelsenktor $\alpha$ und die Winkel $\pm\,\vartheta$ zwischen den Normalen auf die Sende- und/ oder Empfangsanordnung 101 und der Senderichtung.

Fig. 3a zeigt im Schnitt den Schallpegelverlauf aus Fig. 3 für eine Senderichtung I unter einem Winkel -$\vartheta_2$ über der Frequenz f. Dieser Schallpegelverlauf wird über der Frequenz f in einer Entfernung r von der Sende- und/oder Empfangsbasis 101 im Fernfeld gemessen. Fig. 3b zeigt den Schallpegelverlauf der in Senderichtung II unter einem Winkel +$\vartheta$2 gemessen wird. Die Schallpegelverläufe unterscheiden sich für alle Senderichtungen innerhalb des Winkelsektors $\alpha$ wie aus Fig. 3 ersichtlich. Fig. 3c zeigt diesen Zusammenhang zwischen Schallpegel, Winkel und Frequenz gemäß Fig. 3 als Intensitäts- oder Farbschrieb. Abhängig von der statistischen örtlichen Verteilung der Wandlerelemente oder einer statistisch verteilten Zusammenfassung äquidistant angeordneter Wandlerelemente ändert sich der Schalldruckverlauf nach Betrag und Phase. Sind alle Kontakte der Wandlerelemente zugänglich, wird durch Variation der statistischen Zusammenfassung der Wandlerelemente, der Schallpegelverlauf oder Betrag derart optimiert, daß alle Pegelmaxima gleiche Höhe aufweisen und Schalldruckverläufe benachbarter Winkel orthogonal zueinander sind.

Befindet sich ein Zielort Z unter dem Winkel -$\vartheta_2$, so wird von diesem Zielort Z eine Schallwelle reflektiert, deren Amplitudenverteilung über der Frequenz f den in Fig. 3a gezeigten Schallpegelverlauf aufweist, und als Echo E(t) empfangen und in einem Verstärker 110 verstärkt. Das Echo E(t) wird in einem Filter 200 mit einer komplexen Übertragungsfunktion H($\vartheta$,f) bewertet. Die Übertragungsfunktion H($\vartheta$,f) oder Impulsantwort oder der Frequenzgang des Filters 200 ist eine Nachbildung der frequenz- und winkelabhängigen Schalldruckverteilung nach Betrag und Phase. Der Betrag |(H)| ist in Fig. 3 gezeigt.

Aus der Richtung I unter dem Winkel -$\vartheta_2$ wird ein Echo E(t) mit einem komplexen Echofrequenzspektrum empfangen, das durch die Amplituden- und Phasenverteilung der reflektierten Schallwelle über der Frequenz bestimmt ist. Die Amplitude weist den gleichen Verlauf auf wie der Schallpegelverlauf in Fig. 3a. Dieses Echofrequenzspektrum wird im Filter 200 erkannt und dem Winkel -$\vartheta_2$ zugeordnet, unter dem der Zielort Z liegt. Damit ist eine Peilung zum Zielort Z erreicht. Alle Echos E(t) zeigen abhängig von der Lage des Zielorts unterschiedliche Echofrequenzspektren. Mit dem Filter 200 ist eine eindeutige Winkelzuordnung und damit Peilung zum Zielort möglich. Das Filter 200 ist ein sog. Matched Filter, dessen komplexe Übertragungsfunktion H ($\vartheta$,f) an die Schallausbreitung im Winkelsektor $\alpha$ angepaßt

ist.

Die Entfernung r zum Zielort Z wird durch zeitliche Korrelation des Echos E(t) mit dem in einer Verzögerungseinheit 201 in der Zeit verschiebbaren Sendesignal $S(t-t_i)$ bestimmt. Die Zeitverschiebung oder Laufzeit $t_i$, unter der die Korrelationsfunktion ihr Maximum aufweist, wird mit der Schallgeschwindigkeit c verknüpft und liefert die Entfernung r zum Zielort Z, die zusammen mit dem Winkel $\vartheta_2$ auf einer Anzeigeeinheit 300 dargestellt wird.

Für eine zusätzliche Geschwindigkeitsbestimmung zwischen Zielort Z und Sende- und/oder Empfangsanordnung 101 in Richtung des Zielorts Z wird vor der Verzögerungseinheit 201 eine Rechenstufe 401 eingefügt, die das Sendesignal zeitlich dehnt und/oder staucht und ein dopplerverschobenes Zeitsignal

$$ S\left( t \cdot \frac{c \pm 2v}{c} \right) $$

berechnet, bei dem c die Schallgeschwindigkeit und $\pm\,2\,v$ relative Geschwindigkeiten in Sende- und Empfangsrichtungen zwischen Zielort Z und Sende- und Empfangsanordnung 101 kennzeichnen. Die Korrelation des Echos E(t) mit diesem Zeitsignal im Filter 200 ergibt außer einer Richtungs- und Entfernungsangabe auch eine Geschwindigkeitsangabe.

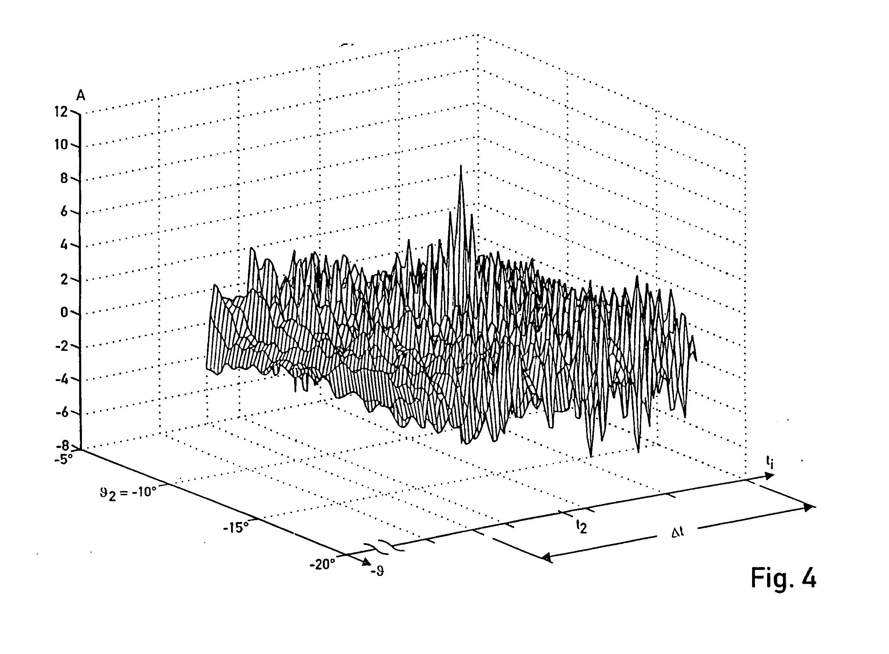

Fig. 4 zeigt das Ausgangssignal A des Filters 200 als Funktion des Winkels $\vartheta$ und der Zeitverschiebung $t_i$. Das Maximum bei Winkel $\vartheta_2$ = -10° und der Laufzeit $t_2$ kennzeichnet den Zielort Z. Die Zeitspanne $\Delta t$ entspricht der Sende-zeitdauer.

Die komplexe Übertragungsfunktion $H(\vartheta,f)$ wird entweder durch Messung der Schalldruckverteilung im Fernfeld der Sende- und/oder Empfangsanordnung 101 mit einem elektroakustischen Wandler mit Kugelcharakteristik in konstantem Abstand in Abhängigkeit vom Winkel $\vartheta$ oder durch Simulation einer Schallausbreitung von örtlich statistisch verteilten Breitbandrauschquellen mit definierten Phasendifferenzen ermittelt und in einer Recheneinheit 400 zur Programmierung des Filters 200 bereitgestellt.

Ein komplexer Reflexionsfaktor $R(\vartheta)$ berücksichtigt die Wellenwiderstände am Reflexionsort, nämlich den Wellenwiderstand des Ausbreitungsmediums und des Zielorts. Der Betrag des Reflexionsfaktors $R(\vartheta)$ kennzeichnet die Dämpfung des Schalls durch das Schallschluckverhalten am Zielort, seine Phase die Zielgeometrie und Reflexionsart, nämlich, ob der Zielort schallweich oder schallhart reflektiert. Der Reflexionsfaktor $R(\vartheta)$ ist abhängig von der Einfallsrichtung des Schalls auf den Zielort und somit eine Funktion des Winkels $\vartheta$.

Eine entfernungs- und frequenzabhängige Dämpfungsfunktion $D(t_i, f)$ wird ebenfalls in der Recheneinheit 400 bereitgestellt und berücksichtigt die frequenzabhängige Dämpfung der gesendeten und am Zielort reflektierten Schallwellen in Abhängigkeit vom zurückgelegten Weg.

Für die Detektion und Ortung weit entfernter Zielorte und/oder ihre Klassifizierung werden die Dämpfungsfunk-tion $D(t_i,f)$ und der Reflexionsfaktor $R(\vartheta)$ zur Programmierung des Filters 200 hinzugezogen. Das Produkt aus Über-tragungsfunktion $H(\vartheta i, f)$ und/oder Reflexionsfaktor $R(\vartheta)$ und/oder Dämpfungsfunktion $D(t_i,f)$ wird in der Recheneinheit 400 gebildet und je nach Aufgabenstellung dem Filter 200 als Impulsantwort aufgeprägt.

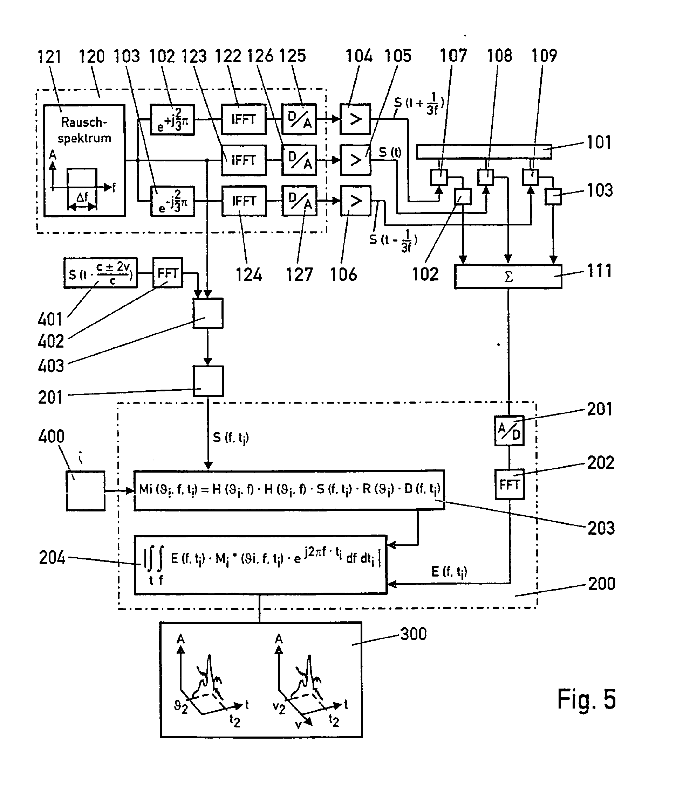

Fig. 5 zeigt ein Blockschaltbild für eine Signalverarbeitung des erfindungsgemäßen Verfahrens, die nicht im Zeitbereich, wie in Fig. 1 dargestellt, sondern im Frequenzbereich durchgeführt wird. In einem modifizierten Rauschgenerator 120 wird in einer Rechenstufe 121 ein komplexes Rauschspektrum mit der Bandbreite $\Delta f$ generiert und in zwei Multiplizierstufen 102 und 103 gegeneinander um Phasendifferenzen $\varphi$ = +/-2/3$\Pi$ breitbandig phasenverschoben. Real-teile der drei so berechneten Sendefrequenzspektren werden in drei Stufen 122, 123, 124 einer inversen Fouriertransformation unterworfen und in den Zeitbereich transformiert, in drei Digital/Analog-Wandlern 125,126 127 in analoge Sendesignale mit frequenzabhängigen Zeitverzögerungen S(t), S(t+1/3f) und S(t-1/3f) gewandelt und in Leistungsverstärkern 104, 105, 106 zur Ansteuerung der zusammengefaßten Wandlerelemente auf der Sendeanordnung 101 ver-stärkt.

Nach der Sendezeitdauer $\Delta t$ werden über Sende/Empfangsweichen 107, 108, 109 Empfangssignale der zusammengefaßten Wandlerelemente über Multiplizierschaltungen 102, 103 mit den gleichen Phasenverschiebungen wie im Sendefall beaufschlagt und zusammen mit dem dritten Empfangssignal in einer Summierstufe 101 zum Echo E(t) zusammengefaßt und verstärkt. Das Echo E(t) wird somit der gleichen Signalverarbeitung unterworfen wie das Sendesignal S(t). Damit werden am Empfangsort selektiv die reflektierten Anteile der Schallwelle empfangen, die den gleichen Ausbreitungsweg wie beim Senden genommen haben, so daß die Schallwelle zweimal die durch die Phasenansteuerung bewirkten frequenzabhängigen Richtungen durchlaufen hat.

Im Filter 200 wird das Echo E(t) in einem A/D-Wandler 201 digitalisiert und in einer FFT-Stufe 202 in ein komplexes Empfangsfrequenzspektrum $E(f, t_i)$ transformiert. Die Recheneinheit 400 liefert die komplexe Übertragungs-funktion $H(\vartheta_i,f)$, den Reflexionsfaktor $R(\vartheta_i)$ und die Dämpfungsfunktion $D(t_i,f)$ wie im Zusammenhang mit Fig. 1 beschrieben. In einer Produktstufe 203 wird das Produkt aus diesen Größen zur Berücksichtigung des Empfangsweg der reflektierten Schallwelle mit der gleichen Übertragungsfunktion $H(\vartheta_i,f)$ multipliziert. Die Produktstufe 203 liefert nach Multiplikation mit dem in der Zeitverzögerungseinheit 201 zeitlich verschiebbaren Sendefrequenzspektrum $S(f,t_i)$ ein Musterspektrum $M_i(\vartheta_i,f,t_i)$. Das Echofrequenzspektrum $E(f,t_i)$ wird mit dem Musterspektrum $M_i(\vartheta_i,f,t_i)$ verglichen, indem das Echofrequenzspektrum $E(f,t_i)$ mit den konjugiert komplexen Musterspektrum $M_i(\vartheta_i,f,t_i)$ über der Frenquenz und Zeit korreliert und in den Winkelbereich transformiert werden.

Durch diese Rechenoperationen wird die im Zusammenhang mit Fig. 1 beschriebenen Filterung des zeitlichen Verlaufs des Echos $E(t)$ nicht im Zeitbereich, sondern im Frequenzbereich durchgeführt. Der Betrag dieser Operation liefert das Ausgangssignal A, das in Fig. 4 gezeigt ist.

Auch hier kann wie in Fig. 1 zur zusätzlichen Geschwindigkeitsbestimmung in einer Rechenstufe 401 aus dem Sendesignal $S(t)$ am Ausgang der Stufe 123 ein dopplerverschobenes Zeitsignal

$$S\left(t \cdot \frac{c \pm 2\,v}{c}\right)$$

berechnet, in einer FFT-Stufe 402 in ein Spektrum $S(f)$ transformiert und über eine Weiche 403 der Zeitverzögerungseinheit 201 zugeführt werden. In der Produktstufe 203 wird dann das Musterspektrum $M_i(\vartheta,f)$ mit dem dopplerbehafteten zeitverschobenen Spektrum $S(f,t_i)$ am Ausgang der FFT-Stufe 402 berechnet und in der Integrationsschaltung 204 mit dem ggf. dopplerbehafteten Echofrequenzspektrum korreliert.

Das Filter 200 ist an die frequenzabhängige Senderichtung der breitbandigen Schallwelle angepaßt und läßt eine Unterscheidung benachbarter Empfangsrichtungen aufgrund der Frequenzkomponenten des Echofrequenzspektrums zu. Diese Unterscheidung ist möglich, da benachbarte Sende- und/oder Empfangsrichtungen orthogonal sind. Die Orthogonalität der richtungsabhängigen Übertragungsfunktionen benachbarter Sende- und/oder Empfangsrichtungen besteht aufgrund der statistischen Verteilung der Sendesignale mit der vorgegebenen Anzahl von Phasendifferenzen und der großen Bandbreite des Rauschsignals, wobei bereits eine Anzahl von drei Phasendifferenzen genügt. Das Integral des Skalarprodukts der Übertragungsfunktion $H(\vartheta_i,f)$ über der Frequenz f in den Grenzen der ausgesendeten Frequenzbandbreite f, $f + \Delta f$ gibt innerhalb des Winkelsektors $\alpha$ nur bei einem Winkel $\vartheta_{Sicht} = \vartheta_2$ einen Beitrag, bei allen anderen Winkeln ist es gleich Null, wenn aus diesem Winkel $\vartheta_{Sicht}$ Schall empfangen wurde.

$$\int H(\vartheta_i, f) \cdot H(\vartheta_2, f)\, df \;\neq\; 0 \text{ für } \vartheta_i = \vartheta_2$$

$$= 0 \text{ für } \vartheta_i \neq \vartheta_2$$

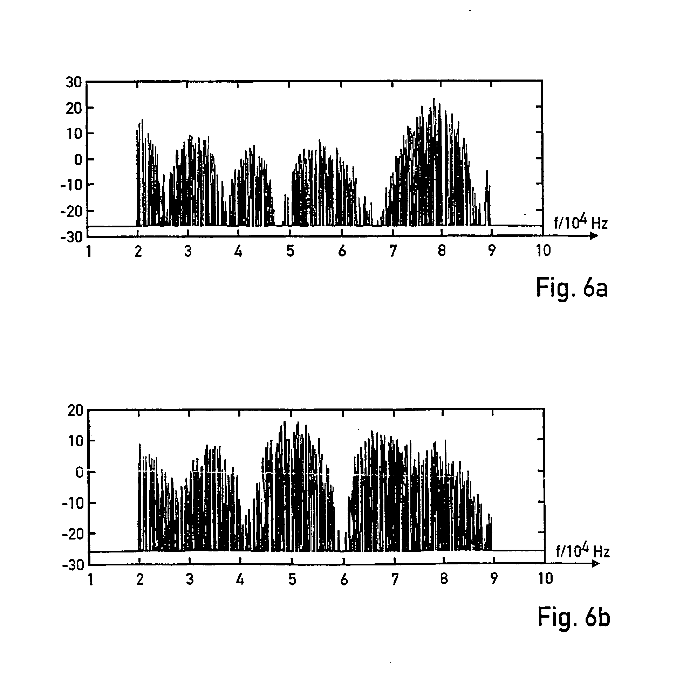

Fig. 6 zeigt den Betrag eines Echofrequenzspektrums $E(f,-\vartheta_2)$ bei Empfang einer Schallwelle unter dem Winkel $-\vartheta_2$, Fig. 6b zeigt den Betrag eines Echofrequenzspektrums $E(f, +\vartheta_2)$ bei Empfang unter dem Winkel $+\vartheta_2$. Die beiden Echofequenzspektren $E(f,-\vartheta_2)$, $E(f, +\vartheta_2)$ unterscheiden sich durch die unterschiedlichen Schallausbreitungsrichtungen signifikant voneinander und entsprechen den Schallpegelverläufen oder Beträgen der Übertragungsfunktionen $|H(-\vartheta_2, f)|$ bzw. $H(+\vartheta_2,f)|$, die in Fig. 3a und 3b gezeigt sind. In der Integrationsrecheneinheit 204 wird das Echofrequenzspektrum $E(f)$ mit dem zeitlich verschiebbaren Sendefrequenzspektrum $S(f,t_i)$ korreliert und so die Laufzeit $t_i$ der Schallwelle bestimmt. Anschließend wird das Echofrequenzspektrum mit dem Musterspektrum $M_i$ für alle Winkel $\vartheta_i$ multipliziert und vom Frequenzbereich in den Winkelbereich transformiert, indem je Winkel alle übereinstimmenden Frequenzkomponenten aufsummiert werden. Das Ergebnis ist eine winkelabhängige Funktion, deren Maximum unter dem Winkel $+\vartheta_2$ oder $-\vartheta_2$ zu finden ist, die die Richtung zum Zielort Z und damit die Empfangsrichtung des Echos kennzeichnen.

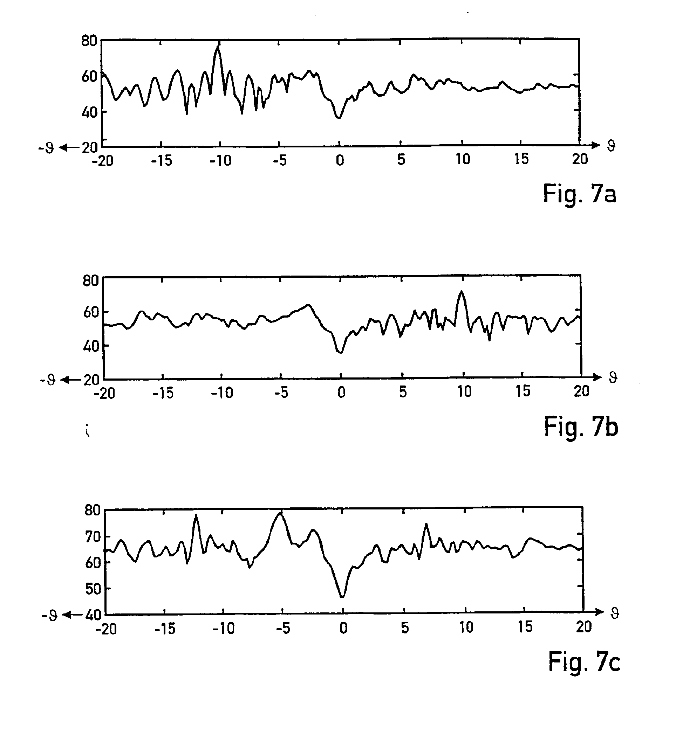

Fig. 7a und 7b zeigen die Filterergebnisse für den Empfang aus den Richtungen unter den Winkel $+/-\vartheta_2$. Fig. 6c zeigt das Ausgangssignal des Filters 200 für drei Zielorte unter den Winkeln -12°, -5° und +7°.

**Patentansprüche**

**1.** Verfahren zum Bestimmen von Richtung und/oder Entfernung reflektierender Zielorte, bei dem Wandlerelemente einer Sende- und/oder Empfangsanordnung (101) zusammengefaßt werden und jeweils mit einem Sendesignal von einer vorgebbaren Anzahl gegeneinander um Phasendifferenzen verschobenen Sendesignalen angesteuert werden zum gerichteten Aussenden von Wellen und Empfangen reflektierter Anteile, **dadurch gekennzeichnet, daß** ein breitbandiges Rauschen um die Anzahl von Phasendifferenzen verschoben wird und die Sendesignale bildet, daß eine Übertragungsfunktion (H) im Ausbreitungsmedium für die breitbandig ausgesendeten Wellen in Abhängigkeit von der Frequenz (f) und Senderichtung ($\vartheta$) und/oder Entfernung (r) innerhalb eines Winkelsektors ($\alpha$) bestimmt wird, daß einem Filter (200) diese Übertragungsfunktion (H) aufgeprägt wird, daß ein empfangenes Echo in dem Filter (200) mit dieser Übertragungsfunktion (H) gefiltert wird und daß das Ausgangssignal (A) des Filters (200) Richtungen ($\vartheta$) und/oder Entfernungen (r) zu Zielorten (Z) angibt.

2. Verfahren nach Anspruch 1, **dadurch gekennzeichnet, daß** Winkelsektor ($\alpha$) und Winkelauflösung durch Frequenz (f) und Bandbreite ($\Delta f$) des Rauschens und Reichweite und Entfernungsauflösung durch Sendezeitdauer ($\Delta t$)des Rauschens vorgegeben werden.

3. Verfahren nach Anspruch 1 oder 2, **dadurch gekennzeichnet, daß** die Wandlerelemente in einer Fläche angeordnet sind.

4. Verfahren nach Anspruch 1 oder 2, **dadurch gekennzeichnet, daß** eine Verbundkeramikplatte mit Elektroden die Wandlerelemente für Schallwellen bilden.

5. Verfahren nach einem der vorangegangenen Ansprüche 1 - 4, **dadurch gekennzeichnet, daß** die Ansteuerung der Wandlerelemente mit den Sendesignalen nach einem statistischen Muster erfolgt.

6. Verfahren nach Anspruch 5, **dadurch gekennzeichnet, daß** die Wandlerlemente statistisch verteilt angeordnet sind.

7. Verfahren nach Anspruch 5, **dadurch gekennzeichnet, daß** die Elektroden auf der Verbundkeramikplatte für die Sendesignale statistisch verteilt sind.

8. Verfahren nach einem der vorangegangenen Ansprüche 1 - 7, **dadurch gekennzeichnet, daß** die Ansteuerung der Wandler nach einem statistischen Muster erfolgt und so variiert wird, daß Übertragungsfunktionen (H) benachbarter Richtungen orthogonal sind und/oder Maxima der Übertragungsfunktion (H) für jede Richtung ($\vartheta$) in Abhängigkeit von der Frequenz (f) annähernd gleiche Pegelwerte aufweisen.

9. Verfahren nach einem vorangegangenen Ansprüche 1 - 8, **dadurch gekennzeichnet, daß** die Übertragungsfunktion (H) durch Messen der Schalldruckverteilung oder Feldstärkeverteilung im Fernfeld der Sendeanlage nach Betrag und Phase in Abhängigkeit von Senderichtung ($\vartheta$) und Frequenz (f) bestimmt wird.

10. Verfahren nach einem Ansprüche 1 - 8, **dadurch gekennzeichnet, daß** durch Simulation der Schalldruckvertilung oder Feldstärkeverteilung im Fernfeld der Sendeanordnung die Übertragungsfunktion (H) bestimmt wird.

11. Verfahren nach einem der Ansprüche 1 - 8, **dadurch gekennzeichnet, daß** die Übertragungsfunktion (H) aus der Summe von Frequenzkomponenten des Rauschens, die ein Abstrahlen von Wellen in die gleiche Senderichtung ($\vartheta$) bewirken, rechnerisch bestimmt wird.

12. Verfahren nach einem der Ansprüche 1 - 11, **dadurch gekennzeichnet daß**, zur filterung die Übertragungsfunktion (H) mit einem Reflexionfaktor (R) für den Zielort (Z) bewertet wird.

13. Verfahren nach einem der Ansprüche 1 - 12, **dadurch gekennzeichnet, daß** zur Filterung das Produkt aus Übertragungsfunktion (H) und einem in der Zeit verschiebbaren Sendesignal und/oder einem Reflexionsfaktor (R) für den Zidort (Z) berechnet wird und das Produkt ein richtungs-, und/oder entfernungs- und frequenzabhängiges Mustersignal bildet, daß das Echo (E) mit dem Mustersignal bezüglich seiner Frequenzkomponenten und/oder Zeitverschiebungen verglichen wird und Übereinstimmungen Richtungen ($\vartheta$) und/oder Entfernungen (r) zu Zielorten (Z) liefern.

14. Verfahren nach einem vorangegangenen Ansprüche 1 - 13, **dadurch gekennzeichnet, daß** ein bandbegrenztes komplexes Rauschspektrum mit beliebiger Phasenverteilung über der Frequenz um die Anzahl von Phasendifferenzen verschoben wird und eine Anzahl komplexer Sendefrequenzspektren bildet und daß jedes Sendefrequenzspektrum in den Zeitbereich transformiert wird und ein Sendesignal zur Ansteuerung bildet.

**15.** Verfahren nach Anspruch 14, **dadurch gekennzeichnet, daß** die Summe von Frequenzkomponenten aus der Anzahl der komplexen Sendefrequenzspektren, die ein Abstrahlen von Wellen in die gleiche Senderichtung bewirken, bestimmt wird und die Summen die frequenzabhängige komplexe Übertragungsfunktion (H) für Wellenwege in alle Senderichtungen ($\vartheta$) bilden.

**16.** Verfahren nach Anspruch 13 oder 14, **dadurch gekennzeichnet, daß** die Übertragungsfunktion (H) mit dem Sendefrequenzspektrum (S(f)) und/oder Reflexionsfaktor (R) des Zielorts (Z) multipliziert wird und ein komplexes richtungs- und frequenzabhängiges Musterspektrum (M) bildet, daß ein empfangenes Echo vom Zeitbereich in ein komplexes Echofrequenzspektrum (E(f)) transformiert und mit dem Musterspektrum (M) verglichen wird und daß das Vergleichsergebnis die Richtungen ($\vartheta$) zu den Zielorten angibt.

**17.** Verfahren nach einem der Ansprüche 1 - 15, **dadurch gekennzeichnet, daß** Empfangssignale aller Wandlerelemente mit den gleichen Phasendifferenzen wie beim Senden beaufschlagt und aufsummiert werden und die Summe das Echo bildet.

**18.** Verfahren nach Anspruch 17, **dadurch gekennzeichnet, daß** eine gleiche Übertragungsfunktion (H) für Empfangsrichtungen ($\vartheta$) , die den Senderichtungen ($\vartheta$) entsprechen, beim Filtern berücksichtigt wird.

**19.** Verfahren nach einem der Ansprüche, 1 - 18, **dadurch gekennzeichnet, daß** die Übertragungsfunktion (H) im Mustersignal oder Musterspektrum (M) mit einer entfernungs- und/oder frequenzabhängigen Dämpfungsfunktion (D) für Wellen entlang ihres Ausbreitungswegs multipliziert wird.

**20.** Verfahren nach einem vorangegangenen Ansprüche 1 - 18, **dadurch gekennzeichnet, daß** jede Entfernung (r) durch Multiplikation der Übertragungsfunkton im Mustersignal oder Musterspektrum (M) mit einem Laufzeitterm vorgegeben wird und der Laufzeitterm den Weg der Welle zum Zielort (Z) und zurück kennzeichnet.

**21.** Verfahren nach einem vorangegangenen Ansprüche 14 - 20, **dadurch gekennzeichnet, daß** im Filter das Produkt aus Echofrequenzspektrum (E(f)), konjugiert komplexem Musterspektrum (M) und einer Exponentialfunktion mit einem imaginären Exponenten aus Frequenz ($2\pi f$) und Laufzeit ($t_i$) über Frequenzen innerhalb der Bandbreite ($\Delta f$) und Zeiten innerhalb der Sendezeitdauer ($\Delta t$) integriert und die Hüllkurve oder der Betrag des Integrals bestimmt wird und Maxima Richtungen ($\vartheta$)und Entfernungen (r) zu den Zielorten (Z) liefern.

**22.** Verfahren nach einem der vorangegangenen Ansprüche 1 - 21, **dadurch gekennzeichnet, daß** die Bandbreite ($\Delta f$) des Rauschens in eine Zahl von Teilfrequenzbändern unterteilt wird und für jedes Teilfrequenzband eine Übertragungsfunktion (H) bestimmt und einem Teilbandfilter aufgeprägt wird und daß alle Teilbandfilter das Filter (200) bilden und parallel mit dem Echo (E) beaufschlagt werden und Signale an ihren Ausgängen direkt oder nach einer Bewertung überlagert werden und das Ausgangssignal des Filters (200) bilden, das Richtungen ($\vartheta$) und Entfernungen (r) zu Zielorten (Z) liefert.

**23.** Verfahren nach Anspruch 13, **dadurch gekennzeichnet, daß** dem in der Zeit verschiebbaren Sendesignal zeitliche Dehnungen und/oder Stauchungen entsprechend Relativgeschwindigkeiten zwischen Zielort (Z) und Sende- und Empfangsanordnung aufgeprägt werden und damit das Mustersignal (M) gebildet wird und daß eine zweidimensionale Korrelation mit dem Echo (E) Richtungen ($\vartheta$) und/oder Entfernungen (r) und Relativgeschwindigkeiten (v) zu Zielorten (Z) liefert.

**24.** Verfahren nach einem der Ansprüche 16 bis 21, **dadurch gekennzeichnet, daß** dem Sendesignal zeitliche Dehnungen und/oder Stauchungen entsprechend Relativgeschwindigkeiten zwischen Zielort (Z) und Sende- und Empfangsanordnung aufgeprägt werden, daß die zeitlich gedehnten oder gestauchten Sendesignale einer Fourier-Transformation unterworfen werden, in der Zeit verschoben werden und mit der Übertragungsfunktion (H) für die Senderichtung, mit der Übertragungsfunktion (H) für die Empfangsrichtung und/oder dem Reflektionsfaktor (R) und/oder der Dämpfungsfunktion (D) multipliziert werden und das Musterspektrum (M) bilden und daß eine zweidimensionale Korrelation mit dem Echofrequenzspektrum Richtungen ($\vartheta$) und/oder Entfernungen (r) und Relativgeschwindigkeiten (v) zum Zielort (Z) liefern.

**25.** Verfahren nach einem vorangegangenen Ansprüche 1 - 24, **dadurch gekennzeichnet, daß** die Wandlerelemente die Sendebasis und/oder Empfangsbasis einer hydrographischen Vermessungsanlage oder einer Minenjagdanlage oder eines unbemannten Unterwasserfahrzeugs bilden.

**26.** Verfahren nach einem vorangegangenen Ansprüche 1 - 24, **dadurch gekennzeichnet, daß** die Wandlerelemente auf der Oberseite eines U-Boots angeordnet sind und Sende- und Empfangsrichtungen zur Wasseroberfläche zeigen.

**27.** Verfahren nach Anspruch 26, **dadurch gekennzeichnet, daß** zur Filterung die Übertragungsfunktion (H) mit einem Reflexionsfaktor (R) für den Zielort (Z) bewertet wird und **daß** der Reflexionsfaktor (R) positiv und/oder reell gewählt wird.

**28.** Verfahren nach Anspruch 26, **dadurch gekennzeichnet, daß**, zur Filterung die Übertragungsfunktion (H) mit einem Reflexionfaktor (R) für den Zielort (Z) bewertet wird und der Reflexionsfaktor (R) eine statistische Phasenverteilung über der Sende/Empfangsrichtung für einen vorgebbaren Entfernungsbereich aufweist

**Claims**

**1.** Method for determination of the direction and/or range of reflective target locations, in which transducer elements of a transmitting and/or receiving arrangement (101) are combined and are in each case driven with one transmission signal from a predeterminable number of transmission signals which are shifted by phase differences with respect to one another, for directional transmission of waves and reception of reflected components, **characterized in that** broadband noise is shifted by the number of phase differences and forms the transmission signals, **in that** a transfer function (H) in the propagation medium is determined for the broadband-transmitted waves as a function of the frequency (f) and transmission direction ($\theta$) and/or range (r) within an angle sector ($\alpha$), **in that** this transfer function (H) is applied to a filter (200), **in that** a received echo is filtered using this transfer function (H) in the filter (200), and **in that** the output signal (A) from the filter (200) indicates directions ($\theta$) and/or ranges (r) for target locations (Z).

**2.** Method according to Claim 1, **characterized in that** the angle sector ($\alpha$) and the angular resolution are predetermined by the frequency (f) and bandwidth ($\Delta f$) of the noise, range and range resolution by the transmission time duration ($\Delta t$) of the noise.

**3.** Method according to Claim 1 or 2, **characterized in that** the transducer elements are arranged on one surface.

**4.** Method according to Claim 1 or 2, **characterized in that** a composite ceramic panel with electrodes forms the transducer elements for sound waves.

**5.** Method according to one of the preceding Claims 1 - 4, **characterized in that** the transducer elements are driven by the transmission signals on the basis of a statistical pattern.

**6.** Method according to Claim 5, **characterized in that** the transducer elements are arranged in a statistically distributed manner.

**7.** Method according to Claim 5, **characterized in that** the electrodes are statistically distributed on the composite ceramic panel for the transmission signals.

**8.** Method according to one of the preceding Claims 1 - 7, **characterized in that** the transducers are driven in accordance with a statistical pattern and the drive is varied such that transfer functions (H) of adjacent directions are orthogonal, and/or maxima of the transfer function (H) are approximately at the same level values for each direction ($\theta$) as a function of the frequency (f).

**9.** Method according to one of the preceding Claims 1 - 8, **characterized in that** the transfer function (H) is determined by measurement of the sound pressure distribution or field strength distribution in the far field of the transmission installation, on the basis of the magnitude and phase, as a function of the transmission direction ($\theta$) and frequency (f).

**10.** Method according to one of Claims 1 - 8, **characterized in that** the transfer function (H) is determined by simulation of the sound pressure distribution or field strength distribution in the far field of the transmission arrangement.

**11.** Method according to one of Claims 1 - 8, **characterized in that** the transfer function (H) is determined by calculation from the sum of the frequency components of the noise which result in emission of waves in the same transmission direction ($\theta$).

**12.** Method according to one of Claims 1 - 11, **characterized in that** the transfer function (H) is weighted with a reflection factor (R) for the target location (Z) for filtering.

**13.** Method according to one of Claims 1 - 12, **characterized in that** the product of the transfer function (H) and a transmission signal which can be shifted in time, and/or a reflection factor (R) for the target location (Z) is calculated for filtering, and the product forms a pattern signal which is dependent on the direction and/or range and/or frequency, **in that** the echo (E) is compared with the pattern signal with respect to its frequency components and/or time shifts, and matches produce directions ($\theta$) and/or ranges (r) for target locations (Z).

**14.** Method according to one of the preceding Claims 1 - 13, **characterized in that** a band-limited complex noise spectrum with an undefined phase distribution is shifted by the number of phase differences over the frequency and forms a number of complex transmission spectra, and **in that** each transmission frequency spectrum is transformed to the time domain, and forms a transmission signal for drive purposes.

**15.** Method according to Claim 14, **characterized in that** the sum of frequency components is determined from the number of complex transmission frequency spectra which result in emission of waves in the same transmission direction, and the sums form the frequency-dependent complex transfer function (H) for the wave paths in all transmission directions ($\theta$).

**16.** Method according to Claim 13 and 14, **characterized in that** the transfer function (H) is multiplied by the transmission frequency spectrum (S(f)) and/or reflection factor (R) of the target location (Z), and forms a complex pattern spectrum (M) which is dependent on the direction and frequency, **in that** a received echo is transformed from the time domain to a complex echo frequency spectrum (E(f)) and is compared with the pattern spectrum (M), and **in that** the comparison result indicates the directions ($\theta$) to the target locations.

**17.** Method according to one of Claims 1 - 15, **characterized in that** received signals from all the transducer elements have the same phase differences applied to them as for transmission and are added, and the sum forms the echo.

**18.** Method according to Claim 17, **characterized in that** the same transfer function (H) is taken into account during filtering for reception directions ($\theta$) which correspond to the transmission directions ($\theta$).

**19.** Method according to one of Claims 1 - 18, **characterized in that** the transfer function (H) in the pattern signal or pattern spectrum (M) is multiplied by an attenuation function (D) which is dependent on the range and/or frequency, for waves along their propagation path.

**20.** Method according to one of the preceding Claims 1 - 18, **characterized in that** each range (r) is predetermined by multiplication of the transfer function in the pattern signal or pattern spectrum (M) by a delay time term, and the delay time term denotes the path of the wave to the target location (Z) and back.

**21.** Method according to one of the preceding Claims 14 - 20, **characterized in that** the product of the echo frequency spectrum (E(f)), complex-conjugate pattern spectrum (M) and an exponential function with an imaginary exponent from the frequency ($2\pi f$) and delay time ($t_i$) is integrated in the filter over frequencies within the bandwidth ($\Delta f$) and times within the transmission time duration ($\Delta t$), and the envelope curve or the magnitude of the integral is determined, and maxima produce directions ($\theta$) and ranges (r) for the destination locations (Z).

**22.** Method according to one of the preceding Claims 1 - 21, **characterized in that** the bandwidth ($\Delta f$) of the noise is subdivided into a number of frequency band elements, and a transfer function (H) is determined for each frequency band element and is applied to a band element filter, and **in that** all of the band element filters form the filter (200), and have the echo (E) applied to them in parallel, and signals are superimposed at their outputs directly or after weighting, and form the output signal of the filter (200) which produces directions ($\theta$) and ranges (r) for target locations (Z).

**23.** Method according to Claim 13, **characterized in that** time expansions and/or compressions corresponding to relative velocities between the target location (Z) and the transmitting and receiving arrangement are applied to the transmission signal, whose time can be shifted, and the pattern signal (M) is thus formed, and **in that** a two-dimensional correlation with the echo (E) produces directions ($\theta$) and/or ranges (r) and relative velocities (v) for target locations (Z).

**24.** Method according to one of Claims 16 to 21, **characterized in that** time expansions and/or compressions corresponding to relative velocities between the target location (Z) and the transmitting and receiving arrangement are applied to the transmission signal, **in that** the time-expanded or compressed transmission signals are subjected to a Fourier transformation, are shifted in time and are multiplied by the transfer function (H) for the transmission direction, by the transfer function (H) for the reception direction and/or the reflection factor (R) and/or the attenuation function (D) and form the pattern spectrum (M), and **in that** a two-dimensional correlation with the echo frequency spectrum produces directions (θ) and/or ranges (r) and relative velocities (v) for the target location (Z).

**25.** Method according to one of the preceding Claims 1-24, **characterized in that** the transducer elements form the transmission base and/or reception base of a hydrographic survey installation or of a mine hunting installation, or of an unmanned underwater vehicle.

**26.** Method according to one of the preceding Claims 1-24, **characterized in that** the transducer elements are arranged on the upper surface of a submarine and point in transmission and reception directions with respect to the water surface.

**27.** Method according to Claim 26, **characterized in that** the transfer function (H) is weighted with a reflection factor (R) for the target location (Z) for filtering, and **in that** the reflection factor (R) is chosen to be positive and/or real.

**28.** Method according to Claim 26, **characterized in that** the transfer function (H) is weighted with a reflection factor (R) for the target location (Z) for filtering, and **in that** the reflection factor (R) has a random phase distribution over the transmission/reception direction for a predeterminable range zone.

## Revendications

**1.** Procédé pour déterminer la direction et/ou la distance vers des cibles réflectives, dans lequel des éléments de convertisseur d'un système d'émission et/ou de réception (101) sont rassemblés et sont chaque fois commandés avec un signal d'émission parmi un nombre prédéterminable de signaux d'émission décalés de différences de phase l'un par rapport à l'autre pour l'émission orientée d'ondes et la réception de parties réfléchies, **caractérisé en ce qu'**un bruit de fond à large bande est décalé du nombre de différences de phase et forme les signaux d'émission, **en ce qu'**une fonction de transfert (H) est déterminée dans le milieu de propagation pour les ondes émises à large bande en fonction de la fréquence (f) et de la direction d'émission (ϑ) et/ou de la distance (r) à l'intérieur d'un secteur angulaire (α), **en ce que** cette fonction de transfert (H) est imposée à un filtre (200), **en ce qu'**un écho reçu est filtré dans le filtre (200) avec cette fonction de transfert (H) et **en ce que** le signal de sortie (A) du filtre (200) indique des directions (ϑ) et/ou des distances (r) vers des cibles (Z).

**2.** Procédé selon la revendication 1, **caractérisé en ce que** le secteur angulaire (α) et la résolution angulaire sont prédéterminés par la fréquence (f) et la largeur de bande (Δf) du bruit de fond et la portée et la résolution de distance sont déterminées par la durée d'émission (Δt) du bruit de fond.

**3.** Procédé selon la revendication 1 ou 2, **caractérisé en ce que** les éléments de convertisseur sont disposés dans une face.

**4.** Procédé selon la revendication 1 ou 2, **caractérisé en ce qu'**une plaque céramique composite avec des électrodes forme les éléments de convertisseur pour des ondes sonores.

**5.** Procédé selon l'une quelconque des revendications précédentes 1 à 4, **caractérisé en ce que** la commande des éléments de convertisseur est effectuée avec les signaux d'émission selon un échantillon statistique.

**6.** Procédé selon la revendication 5, **caractérisé en ce que** les éléments de convertisseur sont disposés avec une répartition statistique.

**7.** Procédé selon la revendication 5, **caractérisé en ce que** les électrodes sont disposées sur la plaque céramique composite avec une répartition statistique pour les signaux d'émission.

**8.** Procédé selon l'une quelconque des revendications précédentes 1 à 7, **caractérisé en ce que** la commande des convertisseurs est effectuée selon un échantillon statistique et est variée de telle manière que des fonctions de transfert (H) de directions voisines soient orthogonales et/ou que les maxima de la fonction de transfert (H) pour chaque direction ($\vartheta$) présentent des niveaux approximativement égaux en fonction de la fréquence (f).

9. Procédé selon l'une quelconque des revendications précédentes 1 à 8, **caractérisé en ce que** la fonction de transfert (H) est déterminée par la mesure de la répartition de la pression sonore ou de la répartition de l'intensité de champ dans le champ lointain de l'installation d'émission selon la valeur et la phase, en fonction de la direction d'émission ($\vartheta$) et de la fréquence (f).

10. Procédé selon l'une quelconque des revendications 1 à 8, **caractérisé en ce que** la fonction de transfert (H) est déterminée par simulation de la répartition de la pression sonore ou de la répartition de l'intensité de champ dans le champ lointain du système d'émission.

11. Procédé selon l'une quelconque des revendications 1 à 8, **caractérisé en ce que** la fonction de transfert (H) est déterminée par le calcul à partir de la somme de composantes de fréquence du bruit de fond, qui provoquent une émission d'ondes dans la même direction d'émission ($\vartheta$).

12. Procédé selon l'une quelconque des revendications 1 à 11, **caractérisé en ce que** la fonction de transfert (H) est évaluée pour le filtrage avec un facteur de réflexion (R) pour la cible (Z).

13. Procédé selon l'une quelconque des revendications 1 à 12, **caractérisé en ce que** l'on calcule pour le filtrage le produit de la fonction de transfert (H) et d'un signal d'émission déplaçable dans le temps et/ou d'un facteur de réflexion (R) pour la cible (Z), et le produit forme un signal échantillon dépendant dé la direction et/ou de la distance et de la fréquence, **en ce que** l'on compare l'écho (E) avec le signal échantillon en ce qui concerne ses composantes de fréquence et/ou ses décalages temporels et des concordances fournissent des directions ($\vartheta$) et/ou des distances (r) vers des cibles (Z).

14. Procédé selon l'une quelconque des revendications précédentes 1 à 13, **caractérisé en ce qu'**un spectre de bruit complexe à bande limitée avec une répartition de phases quelconque est décalé du nombre de différences de phase sur la fréquence et forme un nombre de spectres de fréquences d'émission complexes et **en ce que** chaque spectre de fréquences d'émission est transformé en une plage de temps et forme un signal d'émission pour la commande.

15. Procédé selon la revendication 14, **caractérisé en ce que** la somme des composantes de fréquence est déterminée à partir du nombre des spectres de fréquences d'émission complexes, qui provoquent une émission d'ondes dans la même direction d'émission, et les sommes forment la fonction de transfert complexe (H) dépendant de la fréquence pour des chemins d'ondes dans toutes les directions d'émission ($\vartheta$).

16. Procédé selon la revendication 13 ou 14, **caractérisé en ce que** la fonction de transfert (H) est multipliée par le spectre de fréquences d'émission [S(f)] et/ou le facteur de réflexion (R) de la cible (Z) et forme un spectre échantillon complexe (M) dépendant de la direction et de la fréquence, **en ce qu'**un écho reçu est transformé de la plage temporelle en un spectre de fréquences d'écho complexe [E(f)] et est comparé avec le spectre échantillon (M), et **en ce que** le résultat de la comparaison indique les directions ($\vartheta$) vers les cibles.

17. Procédé selon l'une quelconque des revendications 1 à 15, **caractérisé en ce que** des signaux de réception de tous les éléments de convertisseur sont affectés des mêmes différences de phase que lors de l'émission et sont additionnés et la somme forme l'écho.

18. Procédé selon la revendication 17, **caractérisé en ce qu'**une même fonction de transfert (H) est prise en considération lors du filtrage pour des directions de réception ($\vartheta$) qui correspondent aux directions d'émission ($\vartheta$).

19. Procédé selon l'une quelconque des revendications 1 à 18, **caractérisé en ce que** la fonction de transfert (H) dans le signal échantillon ou le spectre échantillon (M) est multipliée par une fonction d'amortissement (D), dépendant de la distance et/ou de la fréquence, pour des ondes le long de leur chemin de propagation.

20. Procédé selon l'une quelconque des revendications précédentes 1 à 18, **caractérisé en ce que** chaque distance (r) est prédéterminée par multiplication de la fonction de transfert dans le signal échantillon ou le spectre échantillon (M) par un terme de durée et le terme de durée caractérise le chemin de l'onde jusqu'à la cible (Z) et retour.

21. Procédé selon l'une quelconque des revendications précédentes 14 à 20, **caractérisé en ce que** le produit du spectre de fréquences d'écho [E(f)], du spectre échantillon complexe conjugué (M) et d'une fonction exponentielle avec un exposant imaginaire composé de la fréquence ($2\pi f$) et de la durée ($t_i$) est intégré dans le filtre sur des fréquences à l'intérieur de la largeur de bande ($\Delta f$) et sur des temps à l'intérieur de la durée d'émission ($\Delta t$) et la courbe enveloppe ou la valeur de l'intégrale est déterminée et des maxima fournissent des directions ($\vartheta$) et des distances (r) vers les cibles (Z).

**22.** Procédé selon l'une quelconque des revendications précédentes 1 à 21, **caractérisé en ce que** la largeur de bande ($\Delta f$) du bruit de fond est divisée en plusieurs bandes de fréquences partielles et on détermine une fonction de transfert (H) pour chaque bande de fréquences partielle et on l'impose à un filtre de bande partielle et **en ce que** tous les filtres de bande partielle forment le filtre (200) et sont alimentés en parallèle avec l'écho (E) et des signaux sont superposés à leurs sorties directement ou après une évaluation et forment le signal de sortie du filtre (200), qui fournit des directions ($\vartheta$) et des distances (r) vers des cibles (Z).

**23.** Procédé selon la revendication 13, **caractérisé en ce que** des extensions et/ou des compressions temporelles sont imposées au signal d'émission déplaçable dans le temps, en fonction des vitesses relatives entre la cible (Z) et le système d'émission et de réception, et on forme ainsi le signal échantillon (M), et **en ce qu'**une corrélation bidimensionnelle avec l'écho (E) fournit des directions ($\vartheta$) et/ou des distances (r) et des vitesses relatives (v) par rapport à des cibles (Z).

**24.** Procédé selon l'une quelconque des revendications 16 à 21, **caractérisé en ce que** des extensions et/ou des compressions temporelles sont imposées au signal d'émission en fonction des vitesses relatives entre la cible (Z) et le système d'émission et de réception, **en ce que** les signaux d'émission étendus ou comprimés temporellement sont soumis à une transformation de Fourier, sont décalés dans le temps et sont multipliés par la fonction de transfert (H) pour la direction d'émission, la fonction de transfert (H) pour la direction de réception et/ou le facteur de réflexion (R) et/ou la fonction d'amortissement (D) et forment le spectre échantillon (M) et **en ce qu'**une corrélation bidimensionnelle avec le spectre de fréquences d'écho fournit des directions ($\vartheta$) et/ou des distances (r) et des vitesses relatives (v) par rapport à la cible (Z).

**25.** Procédé selon l'une quelconque des revendications précédentes 1 à 24, **caractérisé en ce que** les éléments de convertisseur forment la base d'émission et/ou la base de réception d'une installation de mesure hydrographique ou d'une installation de déminage ou d'un véhicule sous-marin non occupé.

**26.** Procédé selon l'une quelconque des revendications précédentes 1 à 24, **caractérisé en ce que** les éléments de convertisseur sont disposés sur le côté supérieur d'un sous-marin et indiquent des directions d'émission et de réception par rapport à la surface de l'eau.

**27.** Procédé selon la revendication 26, **caractérisé en ce que** la fonction de transfert (H) est évaluée pour le filtrage avec un facteur de réflexion (R) pour la cible (Z) et **en ce que** le facteur de réflexion (R) est choisi positif et/ou réel.

**28.** Procédé selon la revendication 26, **caractérisé en ce que** la fonction de transfert (H) est évaluée pour le filtrage avec un facteur de réflexion (R) pour la cible (Z) et **en ce que** le facteur de réflexion (R) présente une répartition de phases statistique sur une direction d'émission/de réception pour un domaine de distances prédéterminable.

Fig. 1

Fig. 2

Fig. 3

$|H(-\vartheta_2,f)|$

dB

Fig. 3a

$|H(+\vartheta_2,f)|$

dB

Frequenz                                    $\times 10^4$

Fig. 3b

Frequenz                                    $\times 10^4$

Fig. 3c

Fig. 4

Fig. 5

Fig. 6a

Fig. 6b

Fig. 7a

Fig. 7b

Fig. 7c